# EUROPÄISCHE PATENTSCHRIFT

(11) **EP 1 466 846 B1**
(45) Veröffentlichungstag und Bekanntmachung des Hinweises auf die Patenterteilung: **15.07.2009**
(21) Anmeldenummer: 04090137.3
(22) Anmeldetag: 07.04.2004
(51) Int. Cl.: B65G 1/04

(54) **Lagersystem mit mehreren Lagerliften**
Storage system with a plurality of storage lifts
Système de stockage avec plusieurs monte-charge

(30) Priorität: 09.04.2003 DE 20305773 U
(43) Veröffentlichungstag der Anmeldung: 13.10.2004
(73) Patentinhaber: Bellheimer Metallwerk GmbH, 76752 Bellheim (DE)
(72) Erfinder: Neumann, Udo, 65812 Bad Soden (DE)
(74) Vertreter: Grünecker, Kinkeldey, Stockmair & Schwanhäusser Anwaltssozietät

(56) Entgegenhaltungen:
- DE-A1- 1 654 538
- GB-A- 360 791
- US-A- 4 088 237
- US-A- 4 804 307

## Beschreibung

Die Erfindung betrifft ein Lagersystem.

In vielen gewerblichen Bereichen, insbesondere im industriellen Bereich, sind Lager nötig, um eine schnelle und zuverlässige Versorgung mit verschiedensten Gütern zu gewährleisten. Diese Lager müssen gut organisiert sein, um einen schnellen Zugriff und ein sicheres Auffinden der eingelagerten Gegenstände, dem Lagergut, zu gewährleisten. Häufig kommen deshalb moderne, automatisierte Lagersysteme zum Einsatz, um einen schnellen und sicheren Zugriff auf die Lagergüter auch bei großen Lagern, wie z. B. Hochregallagern, zu ermöglichen.

Aus dem Stand der Technik sind verschiedene Lagersysteme zum Ein- und Auslagern von Lagergütem bekannt.

Häufig eingesetzt werden so genannte Lägerlifte. Bei diesen Lagerliften werden Lagergutträger, die die Lagergüter aufnehmen, in Regalsäulen, übereinander angeordnet. Eine Be- und Entladeeinheit, häufig als Vertikalförderer ausgeführt, verfährt vor den Regalsäulen in einem Transportschacht, um die Lagergutträger ein- bzw. auszulagern. Die Be- und Entladeeinheit transportiert die Lagergutträger zu einer Zugriffsöffnung, durch die Lagergut beschickt oder entnommen werden kann. Vor der Zugriffsöffnung befindet sich eine Arbeitsfläche für einen Bediener, der die Lagergüter durch die Zugriffsöffnung entnimmt oder beschickt und den Lagerlift bedient. Ein solcher Lagerlift ist beispielsweise in der DE 101 15 765 A1 beschrieben.

Nachteilig bei den im Stand der Technik bekannten Lagersystemen ist der relativ hohe Personalaufwand. So ist für die Bedienung der bekannten Lagerlifte ständig ein Bediener nötig. Wer Bediener muss untätig auf die Bereitstellung des angeforderten Lagergutes warten, während der Lagerlift arbeitet. Die Wartezeiten des Bedieners sind sowohl unproduktiv und , damit unökonomisch als auch arbeitsunfreundlich, da das Arbeiten des Bedieners von dem Lagerlift abhängig ist, was frustrierend sein kann. Aus finanzieller Sicht sind die Personalkosten des beschriebenen Lagersystems, verglichen mit der daraus resultierenden Arbeitsleistung, zu hoch.

Angesichts des Standes der Technik liegt der Erfindung daher die Aufgabe zugrunde, die aus dem Stand der Technik bekannten Lagersysteme so zu verbessern, dass der Einsatz des erforderlichen Personals optimiert wird.

Erfindungsgemäß wird diese Aufgabe für das eingangs genannte Lagersystem dadurch gelöst, das das Lagersystem wenigstens zwei weitere Lagerlifte und wenigstens ein Modul umfasst, wobei jeder Lagerlift zwei sich bezüglich eines Transportschachtes gegenüberliegende, Lagergut aufnehmende Regalsäulen, mindestens eine Zugriffsöffnung, durch die Lagergut beschickt oder entnommen werden kann und eine in dem Transportschacht zwischen den Regalsäulen und der Zugriffsöffnung verfahrbare Be- und Entladeeinheit umfasst und die insgesamt wenigstens drei Zugriffsöffnungen eine Arbeitsfläche an wenigstens drei Seiten umgrenzen, von der aus das Lagersystem bedienbar ist, wobei mindestens einer der Lagerlifte von einer Seite, entlang seines Transportschachtes, mit dem mindestens einem Modul erweitert ist, das aus einem Transportschacht und mindestens zwei sich bezüglich des Transportschachtes gegenüberliegenden Regalsäulen besteht.

Diese erfindungsgemäße Lösung ist konstruktiv einfach und hat den Vorteil, dass mehrere Lagerlifte eine Arbeitsfläche ausbilden und damit auch von einem Bediener bedient werden können. Während der eine Lagerlift arbeitet und ein von dem Bediener angefordertes Lagergut beschafft, kann der Bediener den nächsten Lagerlift bedienen und an diesem eine neue Lagergutanforderung starten. Da die Zugriffsöffnungen der Lagerlifte an die Arbeitsfläche angrenzen, muss der Bediener keine großen Wege zwischen den Zugriffsöffnungen zurücklegen, was einen geringen Zeitverlust bedeutet. Das erfindungsgemäße Lagersystem ermöglicht somit eine kostengünstige und produktive Lagerhaltung, da mehrere Lagerlifte von einem Bediener von einer Arbeitsfläche aus bedient werden können. Beispielsweise wären für die Bedienung von drei Lagerliften aus dem Stand der Technik drei Bediener nötig.

Gleichzeitig bietet das erfindungsgemäße Lagersystem eine bessere Flächenausnutzung, da die Zugriffsöffnungen der Lagerlifte die Arbeitsfläche umgeben, die dadurch relativ klein ist. Die Seitenlänge der Arbeitsfläche wird im Wesentlichen durch die Breite der Zugriffsöffnungen bestimmt und kann beispielsweise nicht mehr als 3 m betragen. Die Arbeitsfläche vor den Transportöffnungen von drei, wie bisher, nebeneinanderstehenden Lagerliften ist um ein Vielfaches größer als die Arbeitsfläche des ertndungsgemäßen Lagersystems. Außerdem sind die Lagerlifte nicht vom Arbeitsplatz aus be dienbar angeordnet. Vielmehr weist bei nebeneinander angeordneten Lagerliften jeder Lagerlift vor seiner Zugriffsöffnung einen eigenen Arbeitsfläche auf.

Erfindungsgemäß umfasst das Lagersystem wenigstens ein Modul. Hierbei besteht ein Modul aus einem Transportschacht und aus zwei sich bezüglich des Transportschachtes paarweise gegenüberliegenden Regalsäulen. Der modulare Aufbau hat den Vorteil, dass das Lagersystem einfach erweiterbar und an unterschiedliche Anforderungen anpassbar ist. Bei jedem Modul kann eine Zugriffsöffnung beispielsweise durch Weglassen der Außenwände vorgesehen sein, wodurch nur ein Typ von Modul für das gesamte Lagersystem erforderlich ist. Des Weiteren können derartige Module kundenunabhängig und damit in größeren Stückzahlen kostengünstig gefertigt werden. Zusätzlich zu den Regalsäulen-Modulen umfasst jeder Lagerlift eine Be- und Entladeeinheit, die in dem Transportschacht verfährt.

Ein vorhandener Lagerlift ist erfindungsgemäß mit einem Modul so erweitert , dass der Transportschacht lediglich in einer Richtung verlängert wird und sich die neuen Transportsäulen in der gleichen Richtung an die alten anschließen. Die Be- und Entladeeinheit kann das Modul des Lagerlifts, nach einer Anpassung der Steuerungssoftware, mit bedienen. Vorzugsweise sind sämtliche Module eines Lagerlifts nahezu gleich aufgebaut.

Die Leistungsfähigkeit des erfindungsgemäß verbesserten Lagersystems kann durch verschiedene, voneinander unabhängige, jeweils für sich vorteilhafte Weiterbildungen gesteigert werden, wie sie im Folgenden erläutert sind.

Ein Lagerlift kann in einer vorteilhaften Ausgestaltung mit Modulen so erweitert werden, dass der Transportschacht in beiden Richtungen erweitert wird und die neuen Regalsäulen sich in beiden Richtungen an die alten anschließen. Bei dieser Variante erstreckt sich der Lagerlift ausgehend von der Zugriffsöffnung seitlich in beide Richtungen, wodurch der Lagerlift sehr flexibel erweiterbar ist.

Die größte verbleibende, nicht zur Grundfläche des Lagersystems gehörende, rechteckige Fläche einer Lagerraumgrundfläche, auf der das Lagersystem angeordnet ist, kann gemäß einer weiteren vorteilhaften Ausgestaltung kleiner sein als die Grundfläche bzw. Außenkontur eines zusätzlichen Moduls. Hierbei zählt der Arbeitsplatz zur genutzten Fläche des Lagersystems. Dies bedeutet, dass bei dieser Ausgestaltung das erfindungsgemäße Lagersystem immer eine optimale Raumausnutzung bietet.

Ferner kann die Arbeitsfläche des Lagersystems im Wesentlichen rechteckförmig ausgebildet werden, wodurch ein lückenloses Aneinandergrenzen der ebenfalls rechteckförmigen Lagerlifte erreicht wird. Hierdurch wird die Flächenausnutzung des Arbeitsraums gesteigert, da keine ungenutzten Grundflächen innerhalb des Lagersystems entstehen.

Des Weiteren kann das Lagersystem aus Modulen, die verschieden große Grundflächen bzw. Außenkonturen aufweisen, aufgebaut werden. Dies hat den Vorteil, dass je nach Größe und damit Flächenbedarf der zu lagernden Güter unterschiedliche Lagersysteme realisierbar sind. So kann beispielsweise ein Lagersystem für große Lagergüter, wie z.B. Karosserieteile eines Autos, aus großflächigen Modulen und ein Lagersystem für kleine Lagergüter, wie z.B. Schrauben, aus Modulen mit kleinen Grundflächen aufgebaut sein. Hierdurch wird der Einsatzbereich eines solchen, erfindungsgemäßen Lagersystems vergrößert, denn es kann Kundenwünschen individuell angepasst werden.

Ferner kann das Lagersystem in einer weiteren vorteilhaften Weiterbildung aus Lagerliften, deren Regalsäulenmodule verschiedene Grundflächen bzw. Außenkonturen haben, aufgebaut sein. Hierdurch können ein Lagerlift mit großflächigen Modulen und einer mit kleinflächigen in einem Lagersystem kombiniert sein. Dies erhöht ebenfalls die Flexibilität bei der Planung des Lagersystems.

Darüber hinaus ist die Flächenausnutzung der Lagerraumgrundfläche von der Grundfläche der Regalsäulen abhängig. Unter der Flächenausnutzung wird der Quotient aus Grundfläche des Lagersystems und Lagerraumfläche verstanden. Hierdurch kann bei einer vorgegebenen Lagerraumgrundfläche die Flächenausnutzung durch Änderung der Grundfläche der Regalsäulen während der Planung des Lagersystems optimiert werden.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargestellt wurde.
Es zeigen:
- Fig. 1: eine Ausführungsform eines erfindungsgemäßen Lagersystems schematisch in einer Draufsicht;
- Fig. 2: eine zweite Ausführungsform eines erfindungsgemäßen Lagersystems schematisch in einer Draufsicht mit Regalsäulen mit veränderter Grundfläche;
- Fig. 3: eine weitere Ausführungsform eines erfindungsgemäßen Lagersystems schematisch in einer Draufsicht mit veränderter Regalsäulengrundfläche, Regalsäulenanzahl und Anordnung der Lagerlifte;
- Fig. 4: eine weitere Ausführungsform eines erfindungsgemäßen Lagersystems schematisch in einer Draufsicht mit unterschiedlicher Anordnung der Lagerlifte;
- Fig. 5: eine Ausführungsform eines Moduls schematisch in einer Draufsicht;
- Fig. 6: eine weitere Ausführungsform eines erfindungsgemäßen Lagersystems schematisch in einer Draufsicht mit veränderten Regalsäulengrundflächen.

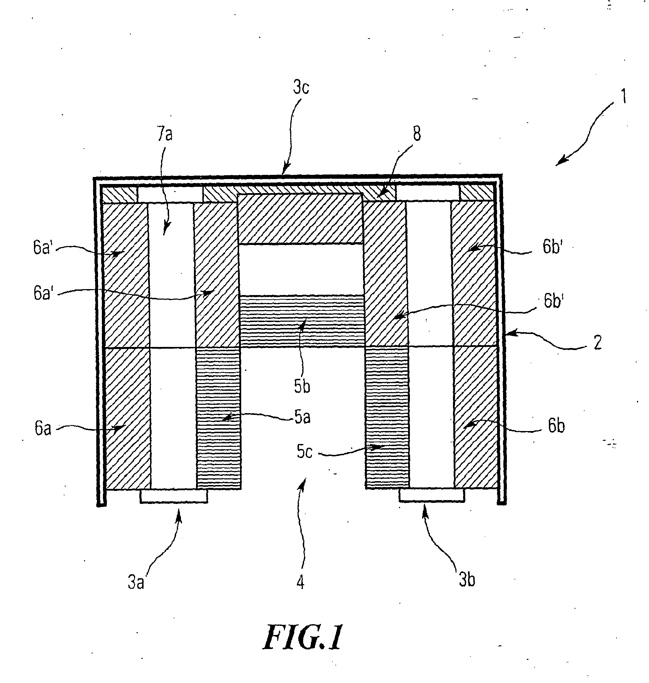

Zunächst wird der allgemeine Aufbau eines erfindungsgemäßen Lagersystems mit Bezug auf die Fig. 1 beschrieben. lm Folgenden sind bei mehreren baugleichen Elementen die einzelnen Elemente zusätzlich zur Bezugsziffer mit Buchstaben gekennzeichnet, um die einzelnen Elemente voneinander zu unterscheiden. Kommt es bei der folgenden Beschreibung nicht auf das einzelne Element als solches an, sind diese Buchstaben weggelassen. Bei den unterschiedlichen Ausführungsformen werden gleiche Elemente mit den gleichen Bezugsziffern gekennzeichnet.

ln Fig. 1 ist eine Ausführungsform eines Lagersystems 1 schematisch in einer Draufsicht gezeigt. Das Lagersystem 1 ist auf einer Lagerraumgrundfläche 2 angeordnet, umfasst mehrere Lagerlifte 3 und eine Arbeitsfläche 4. In der beispielhaften Ausführungsform in Fig. 1 sind dies drei Lagerlifte 3a, 3b, 3c. Jeder der Lagerlifte 3 hat eine Zugriffsöffnung 5, durch die ein Bediener Zugriff auf gewünschte Lagergüter hat. Die Lagergüter werden in Regalsäulen 6 gelagert. Die Regalsäulen 6 sind gegenüberliegend bezüglich eines Transportschachtes 7 angeordnet, in dem eine Be- und Entladeeinheit verfährt. Die Be- und Entladeeinheit befördert die gewünschten Lagergüter von den Regalsäulen 6 zu der Zugriffsöffnung 5 und umgekehrt.

ln Fig. 1 nicht dargestellt ist, dass der Bereich ober- und unterhalb der Transportöffnung 5 ebenfalls als Regalsäule 6 ausgestaltet ist.

Der Lagerlift 3a ist in Fig. 1 seitlich erweitert. Hierbei sind zusätzliche Regalsäulen 6a' neben der Regalsäule 6a und der Zugriffsöffnung 5a, zu beiden Seiten des Transportschachtes 7a, angeordnet. Die Be- und Entladeeinheit verfährt zu den zusätzlichen Regalsäulen 6a' in dem ebenfalls erweiterten Transportschacht 7a. Wie in Fig. 1 beispielhaft dargestellt, weisen die seitlichen Lagerlifte 3a, 3b eine Erweiterung mit zusätzlichen Regalsäulen 6a', 6b' auf, der zentrale Lagerlift 3c jedoch nicht.

Ein Bediener, der sich auf der Arbeitsfläche 4 befindet, bedient sämtliche Lagerlifte 3 des Lagersystems 1, da die Zugriffsöffnungen 5 an die Arbeitsfläche 4 angrenzend angeordnet sind. Da die Zugriffsöffnungen 5 der unterschiedlichen Lagerlifte nicht mehr als 3 m voneinander beabstandet sind, gelangt der Bediener ohne größeren Zeitverlust von einer Zugriffsöffnung 5 zur anderen.

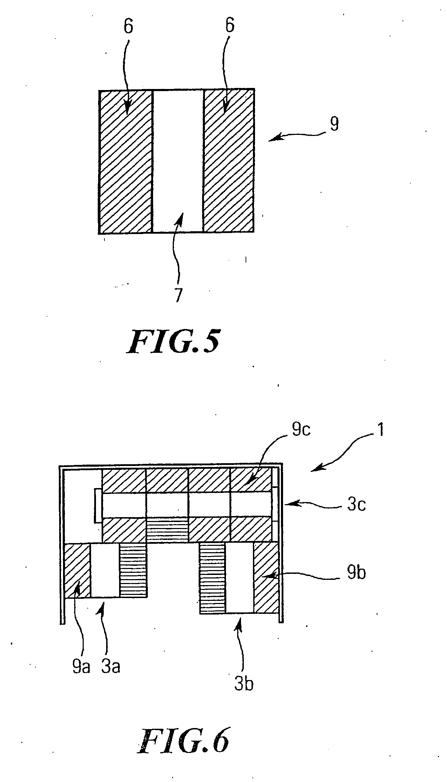

Die in Fig. 1 beispielhaft dargestellten Lagerlifte sind modular aufgebaut, wodurch eine einfache Erweiterung des Lagersystems 1 möglich ist. Ein einzelnes Modul 9, dargestellt in Fig. 5, besteht aus einem Transportschacht 7 und zwei um den Transportschacht 7 angeordnete, gegenüberliegende Regalsäulen 6. Um ein Modul 9 mit einer Zugriffsöffnung 5 zu versehen, wird ein Teil einer die Regalsäule 6 umgebenden Außenhaut entfernt. Zusätzlich wird pro Lagerlift 3 eine Be- und Entladeeinheit benötigt. Diese Be- und Entladeeinheit verfährt in dem Transportschacht 7 zwischen Regalsäulen 6 und Zugriffs-öffnung 5, um die Regalsäulen 6 mit Lagergut zu be- und entladen.

Die in Fig. 1 beispielhaft dargestellte, im Wesentlichen rechteckförmigen Lagerraumgrundfläche 2 wird durch das Lagersystem optimal ausgenutzt. Dies wird durch die Anordnung der Zugriffsöffnungen 5 um die Arbeitsfläche 4 herum und die zusätzlichen Regalsäulen 6a', 6b' erreicht. Nachweisbar wird dies dadurch, dass die größte verbleibende Grundfläche 8 der Lagerraumgrundfläche 2 kleiner ist als die Grundfläche eines weiteren Moduls. Bei einer nicht optimalen Flächennutzung wären Teile der Lagerraumgrundfläche ungenutzt, die groß genug wären, um zusätzliche Regalsäulen aufzustellen.

Die Arbeitsfläche 4 ist in Fig. 1 beispielhaft im Wesentlichen rechteckig ausgeführt. Diese rechteckige Form der Arbeitsfläche 4, die an drei Seiten von den Zugriffsöffnungen 5 umgrenzt wird, ist besonders vorteilhaft, da dadurch die zusätzlichen Regalsäulen 6a', 6b' der seitlichen Lagerlifte 3a, 3b lückenlos an den zentralen Lagerlift 3c angrenzen und dadurch keine ungenutzten Teile der Lagerraumgrundfläche 2 entstehen.

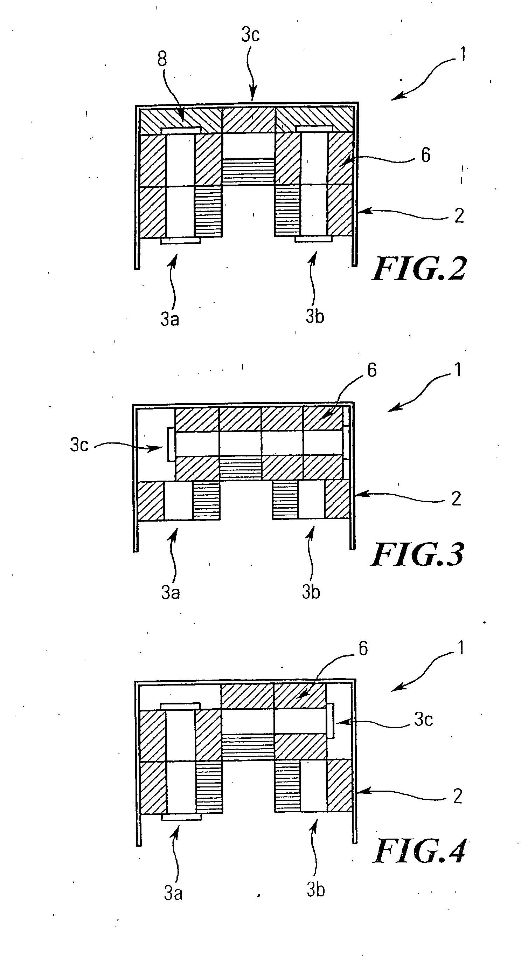

In Fig. 2 ist ein weiteres Lagersystem 1 beispielhaft dargestellt. Ähnlich wie das in Fig. 1 besteht auch das in Fig. 2 dargestellte Lagersystem 1 aus drei Lagerliften 3. Die seitlichen Lagerlifte 3a, 3b bestehen ebenfalls aus vier Regalsäulen 6 und der dritte Lagerlift 3c besteht aus zwei Lagersäulen 6. Unterschiedlich zu dem in Fig. 1 dargestellten Lagersystem 1 ist die Grundfläche der Regalsäulen 6, aus denen das Lagersystem 1 in Fig. 2 aufgebaut ist. Die nichtgenutzte Fläche 8 der Lagerraumgrundfläche 2 ist bei dem Ausführungsbeispiel in Fig. 2 größer als bei dem in Fig. 1. Hierdurch wird ersichtlich, wie sich die Grundfläche der Regalsäulen 6 auf die Flächenausnutzung auswirkt.

In Fig. 3 ist eine weitere Ausführungsform des erfindungsgemäßen Lagersystems 1 beispielhaft dargestellt. Das Lagersystem 1 besteht auch aus insgesamt drei Lagerliften 3, wobei die seitlichen Lagerlifte 3a, 3b aus jeweils nur zwei Regalsäulen 6 bestehen und der zentrale Lagerlift 3c aus acht Regalsäulen 6 besteht.

Das in Fig. 4 beispielhaft dargestellte Lagersystem 1 besteht ebenfalls aus drei Lagerliften 3, wobei der eine seitliche Lagerlift 3b aus zwei Regalsäulen 6 besteht und die beiden anderen Lagerlifte 3a, 3c aus jeweils vier Regalsäulen 6 bestehen. Bei dem Lagersystem in Fig. 4 ist zu sehen, dass auch ein unsymmetrischer Aufbau des Lagersystems 1 möglich ist.

Fig. 6 stellt ein Ausführungsbeispiel des erfindungsgemäßen Lagersystems 1 dar, bei dem die Lagerlifte 3 unterschiedliche Grundflächen der Module 9 aufweisen. So sind die Grundflächen der Module von Lagerlift 3b am größten und die von Lagerlift 3c am kleinsten. Die Grundfläche des Moduls von Lagerlift 3a liegt flächenmäßig in der Mitte und alle drei Lagerlifte 3 sind in einem Lagersystem 1 kombiniert.
Zusammenfassend sind wie in den Fig. 1 bis 4 und 6 beispielhaft dargestellt, unterschiedliche Ausführungsformen des erfindungsgemäßen Lagersystems 1 möglich. Je nach Größe der zur Verfügung stehenden Lagerraumgrundfläche 2 und je nach Grundfläche der Regalsäulen 6 kann das Lagersystem 1 somit durch unterschiedliche Lagerlifte 3 variiert werden, um eine optimale Raumausnutzung des Arbeitsraums 2 zu erreichen.

## Patentansprüche

1. Lagersystem (1) mit wenigstens drei Lagertiften (3) und wenigstens einem-Modul:(9),
- wobei jeder Lagerlift (3) zwei sich bezüglich eines Transportschachtes (7) gegenüberliegende, Lagergut aufnehmende Regalsäulen (6), mindestens eine Zugriffsöffnung (5), durch die Lagergut beschickt oder entnommen werden kann, und eine in dem Transportschacht (7) zwischen den Regalsäulen (6) und der Zugriffsöffnung (5) verfahrbare Be- und Entladeeinheit umfasst;
- wobei die insgesamt wenigstens drei Zugriffsöffnungen (5) der wenigstens drei Lagerlifte (3) eine Arbeitsfläche (4) an wenigstens drei Seiten umgrenzen, von der aus das Lagersystem (1) bedienbar ist;
- wobei jedes Modul (9) aus einem Transportschacht (7) und mindestens zwei sich bezüglich des Transportschachtes (7) gegenüberliegenden Regalsäulen (6) besteht; und
- wobei mindestens einer der Lagerlifte (3) von einer Saite entlang seines Transportschachtes (7), mit dem mindestens einem Modul (9) erweitert ist.

2. Lagersystem (1) nach Anspruch 1, **dadurch gekennzeichnet, dass** die Lagerlifte (3) aus mehreren Modulen (9) erweiterbar aufgebaut sind.

3. Lagersystem (1) nach einem der oben genannten Ansprüche, **dadurch gekennzeichnet, dass** mindestens einer der Lagerlifte (3) zu beiden Seiten, entlang des Transportschachtes (7), mit mindestens jeweils einem weiteren Modul (9) erweitert ist.

4. Lagersystem (1) nach einem der oben genannten Ansprüche, **dadurch gekennzeichnet, dass** die größte verbleibende, nicht zur Grundfläche des Lagersystems (1) gehörende, rechteckige Fläche einer Lagerraumgrundfläche (2), auf der das Lagersystem (1) angeordnet ist, kleiner ist als die Grundfläche eines zusätzlichen Moduls (9), wobei die Arbeitsfläche (4) zur Grundfläche des Lagersystems (1) zählt.

5. Lagersystem (1) nach einem der oben genannten Ansprüche, **dadurch gekennzeichnet, dass** die Arbeitsfläche (4) im Wesentlichen rechteckförmig ausgebildet ist.

6. Lagersystem (1) nach einem der oben genannten Ansprüche, **dadurch gekennzeichnet, dass** das Lagersystem (1) mit Regalsäulen (6) mit unterschiedlichen Grundflächen aufbaubar ist.

7. Lagersystem (1) nach einem der oben genannten Ansprüche, **dadurch gekennzeichnet, dass** die Flächenausnutzung der Lagerraumgrundfläche (2) von der Grundfläche der Regalsäulen (6) abhängt, wobei die Flächenausnutzung der Quotient aus Grundfläche des Lagersystems (1) und Lagerraumgrundnäche (2) ist.

8. Lagersystem (1) nach einem der oben genannten Ansprüche, **dadurch gekennzeichnet, dass** das Lagersystem (1) mit Lagerliften (3) aufbaubar ist, deren Regalsäulen (6) unterschiedliche Grundflächen haben.

9. Lagersystem (1) nach einem der oben genannten Ansprüche, **dadurch gekennzeichnet, dass** die Zugriffsöffnungen (5) unterschiedlicher Lagerlifte (3) nicht mehr als 3 m voneinander beabstandet sind.

## Claims

1. Storage System (1) with at least three storage lifts (3) and at least one module (9),
- wherein each storage lift (3) has two shelf columns (6) opposing each other relative to a transport shaft (7) and accommodating stored objects, at least one access opening (5) through which the stored objects can be deposited or removed, and a loading and unloading unit which can be moved in the transport shaft (7) between the shelf columns (6) and the access opening (5);
- wherein the total of at least three access openings (5) of the at least three storage lifts (3) border a work surface (4) on at least three sides, from which the storage System (1) can be operated;
- wherein each module (9) comprises a transport shaft (7) and at least two shelf columns (6) opposing each other relative to the transport shaft (7); and
- wherein at least one of the storage lifts (3) is extended from one side along its transport shaft (7) by the at least one module (9).

2. Storage System (1) as claimed in claim 1, **characterised in that** the storage lifts (3) are configured to be extended from a plurality of modules (9).

3. Storage System (1) as claimed in one of the preceding claims,
**characterised in that** at least one of the storage lifts (3) is extended on both sides along the transport shaft (7) by at least one additional module (9) respectively.

4. Storage System (1) as claimed in one of the preceding claims,
**characterised in that** the largest remaining rectangular floor surface area of a warehouse floor space (2) on which the storage System (1) is disposed that does not belong to the floor surface area of the storage System (1) is smaller than the floor surface area of an additional module (9), and the work surface (4) constitutes part of the floor surface area of the storage System (1).

5. Storage System (1) as claimed in one of the preceding claims,
**characterised in that** the work surface (4) is of an essentially rectangular shape.

6. Storage System (1) as claimed in one of the preceding claims,
**characterised in that** the storage System (1) may be erected with shelf columns (6) with different floor surface areas.

7. Storage System (1) as claimed in one of the preceding claims,
**characterised in that** the surface utilization of the warehouse floor surface (2) depends on the floor surface area of the shelf columns (6) and the surface utilization is the quotient of the floor surface area of the storage System (1) and the warehouse floor space (2).

8. Storage System (1) as claimed in one of the preceding claims,
**characterised in that** the storage System (1) is adapted to be configured with storage lifts (3), the shelf columns (6) of which have different floor surface areas.

9. Storage System (1) as claimed in one of the preceding claims,
**characterised in that** the access openings (5) of different storage lifts (3) are spaced apart from one another by no more than 3 m.

## Revendications

1. Système de stockage (1) comprenant au moins trois élévateurs de stockage (3) et au moins un module (9),
chaque élévateur de stockage (3) comprenant deux colonnes d'étagère accueillant des marchandises à stocker (6) et se faisant face, de part et d'autre d'un puits de transport (7), au moins une ouverture d'accès (5) à travers laquelle la marchandise à stocker peut être chargée ou retirée, et une unité de chargement et de déchargement pouvant être déplacée dans le puits de transport (7) entre les colonnes d'étagère (6) et l'ouverture d'accès (5) ;
au moins trois ouvertures d'accès (5) des au moins trois élévateurs de stockage (3) délimitant une surface de travail (4) au niveau d'au moins trois côtés, à partir de laquelle le système de stockage (1) peut être manoeuvré ;
chaque module (9) étant constitué d'un puits de transport (7) et d'au moins deux colonnes d'étagère (6) se faisant face de part et d'autre du puits de transport (7) ; et
au moins un des élévateurs de stockage (3) étant prolongé depuis un côté, le long de son puits de transport (7), par le au moins un module (9).

2. Système de stockage (1) selon la revendication 1, **caractérisé en ce que** les élévateurs de stockage (3) sont assemblés à partir de plusieurs modules (9) de manière extensible.

3. Système de stockage (1) selon l'une 10 quelconque des revendications précédentes, **caractérisé en ce qu'**au moins un des élévateurs de stockage (3) est prolongé de deux côtés, le long du puits de transport (7), par au moins respectivement un autre module (9).

4. Système de stockage (1) selon l'une quelconque des revendications précédentes, **caractérisé en ce que** la plus grande surface rectangulaire restante, n'appartenant pas à la surface de base du système de stockage (1), d'une surface de base 20 d'entrepôt (2), sur laquelle est disposé le système de stockage (1), est inférieure à la surface de base d'un module supplémentaire (9), la surface de travail (4) comptant dans la surface de base du système de stockage (1).

5. Système de stockage (1) selon l'une quelconque des revendications précédentes, **caractérisé ce que** la surface de travail (4) est essentiellement de forme rectangulaire.

6. Système de stockage (1) selon l'une quelconque des revendications précédentes, **caractérisé en ce que** le système de stockage (1) peut être assemblé avec des colonnes d'étagère (6) ayant des surfaces de base différentes.

7. Système de stockage (1) selon l'une quelconque des revendications précédentes, **caractérisé en ce que** l'utilisation des surfaces de base (2) de l'entrepôt dépend des surfaces de base des colonnes d'étagère (6), l'utilisation des surfaces étant représentée par le quotient de la surface de base du 5 système de stockage (1) et de la surface de base d'entrepôt (2) .

8. Système de stockage (1) selon l'une quelconque des revendications précédentes, **caractérisé en ce que** le système de stockage (1) peut être assemblé avec des élévateurs de stockage (3) dont les colonnes d'étagère (6) ont des surfaces de bases différentes.

9. Système de stockage (1) selon l'une quelconque des revendications précédentes, **caractérisé en ce que** les ouvertures d'accès (5) des différents élévateurs de stockage (3) ne sont pas espacées les unes des autres de plus de 3 mètres.
